# EUROPEAN PATENT APPLICATION

(11) **EP 4 712 545 A1**
(43) Date of publication of application: **18.03.2026**
(21) Application number: 23936029.0
(22) Date of filing: 09.05.2023
(51) Int. Cl.: H04W 28/02, H04W 52/02, H04W 76/15

(54) **LOW-DELAY SERVICE TRANSMISSION METHODS, ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/093057
(87) International publication number: WO 2024/229702

(57) **Abstract**

The embodiments of the present disclosure relate to the technical field of mobile communications, and provide low-delay service transmission methods, an electronic device and a storage medium. A low-delay service transmission method is applied to a first access point device (AP), and comprises: under a first link, when obtaining a transmission opportunity (TXOP) and transmitting a non-low-delay service with a first station device (STA), adding first identification information to a data frame of a first low-delay service, the first identification information identifying whether the first low-delay service is transmitted within the TXOP, the first low-delay service including a service of the first AP and the first STA under the first link and/or a service of a second AP and a second STA under a second link, the first AP and the second AP belonging to a same AP MLD, and the first STA and the second STA belonging to a same non-AP MLD. The embodiment of the present disclosure provides a mode for transmitting low-delay services.

## Description

### TECHNICAL FIELD

Embodiments of the present disclosure relate to a field of mobile communication technologies, and specifically, the embodiments of the present disclosure relate to a low-latency service transmission method, an electronic device, and a storage medium.

### BACKGROUND

Currently, topics studied by Wi-Fi technology include Ultra High Reliability (UHR), whose vision is to improve reliability of Wireless Local Area Networks (WLAN) connectivity, reduce latency, improve manageability, increase throughput at different Signal to Noise Ratio (SNR) levels, and reduce device-level power consumption. In the UHR, a low-latency service is further enhanced, and therefore, there is a need to provide a way of transmitting the low-latency service.

### SUMMARY

Embodiments of the present disclosure provide a low-latency service transmission method, an electronic device, and a storage medium, so as to provide a way of transmitting the low-latency service.

In an aspect, the embodiments of the present disclosure provide a low-latency service transmission method, applied to a first access point AP, the method includes:
when acquiring a Transmit Opportunity TXOP in a first link and transmitting a non-low-latency service with a first station STA, adding first identifier information to a data frame of a first low-latency service; where the first identifier information indicates whether the first low-latency service is transmitted within the TXOP;
where the first low-latency service includes: a service between the first AP and the first STA in the first link and/or a service between a second AP and a second STA in a second link;
where the first AP and the second AP affiliate to a same AP MLD, and the first STA and the second STA affiliate to a same non-AP MLD.

In another aspect, the embodiments of the present disclosure further provide a low-latency service transmission method, applied to a station STA, the method includes:
when transmitting a non-low-latency service with a first access point AP in a first link, receiving a data frame of a first low-latency service sent by the first AP; where the data frame of the first low-latency service includes first identifier information, and the first identifier information indicates whether the first AP transmits the first low-latency service within a Transmit Opportunity TXOP acquired in the first link;
where the first low-latency service includes a service between the first AP and a first STA in the first link and/or a service between a second AP and a second STA in a second link;
where the first AP and the second AP affiliate to a same AP MLD, and the first STA and the second STA affiliate to a same non-AP MLD.

In another aspect, the embodiments of the present disclosure further provide an electronic device, where the electronic device is a first access point AP, and the electronic device includes:
a transmission module, configured to, when acquiring a Transmit Opportunity TXOP in a first link and transmitting a non-low-latency service with a first station STA, add first identifier information to a data frame of a first low-latency service; where the first identifier information indicates whether the first low-latency service is transmitted within the TXOP; where the first low-latency service includes a service between the first AP and the first STA in the first link and/or a service between a second AP and a second STA in a second link;
where the first AP and the second AP affiliate to a same AP MLD, and the first STA and the second STA affiliate to a same non-AP MLD.

In another aspect, the embodiments of the present disclosure further provide an electronic device, where the electronic device is a station STA, the electronic device includes:
a receiving module, configured to receive a data frame of a first low-latency service sent by a first AP when transmitting a non-low-latency service with the first AP in a first link; where the data frame of the first low-latency service includes first identifier information, and the first identifier information indicates whether the first AP transmits the first low-latency service within a Transmit Opportunity TXOP acquired in the first link; where the first low-latency service includes a service between the first AP and a first STA in the first link and/or a service between a second AP and a second STA in a second link;
where the first AP and the second AP affiliate to a same AP MLD, and the first STA and the second STA affiliate to a same non-AP MLD.

The embodiments of the present disclosure further provide an electronic device including a memory, a processor, and a computer program stored in the memory and executable by the processor, where the processor executes the program to implement one or more of the methods described in the embodiments of the present disclosure.

The embodiments of the present disclosure further provide a computer-readable storage medium, where the computer-readable storage medium stores a computer program, and the computer program, when executed by a processor, implements one or more of the methods described in the embodiments of the present disclosure.

In the embodiments of the present disclosure, when the first AP acquires the TXOP in the first link and transmits the non-low-latency service with the first station STA, the first identifier information is added into a data frame of a first low-latency service to indicate whether the first low-latency service is transmitted within the TXOP; when the low-latency service transmission is needed, the low-latency service may be ensured to be transmitted within the acquired TXOP, so as to meet the UHR requirement. The embodiments of the present disclosure provide a way of transmitting the low-latency service.

### BRIEF DESCRIPTION OF THE DRAWINGS

In order to more clearly illustrate the technical solutions of the embodiments of the present disclosure, a brief introduction of the accompanying drawings required for describing the embodiments of the present disclosure is given below. Obviously, the accompanying drawings in the following description merely show some embodiments of the present disclosure, and for those skilled in the art, other drawings may also be obtained based on these drawings without creative efforts.
FIG. 1 is a first schematic diagram of a scenario according to an embodiment of the present disclosure;
FIG. 2 is a second schematic diagram of a scenario according to an embodiment of the present disclosure;
FIG. 3 is a first flowchart of a low-latency service transmission method provided in an embodiment of the present disclosure;
FIG. 4 is a second flowchart of a low-latency service transmission method provided in an embodiment of the present disclosure;
FIG. 5 is a third schematic diagram of a scenario according to an embodiment of the present disclosure;
FIG. 6 is a first structural schematic diagram of an electronic device provided in an embodiment of the present disclosure;
FIG. 7 is a second structural schematic diagram of an electronic device provided in an embodiment of the present disclosure;
FIG. 8 is a third structural schematic diagram of an electronic device provided in an embodiment of the present disclosure.

### DETAILED DESCRIPTION

Exemplary embodiments are described in detail herein, with examples illustrated in the accompanying drawings. In the following description, unless otherwise specified, the same reference numerals denote the same or similar elements in different drawings. The embodiments described in the following examples do not represent all embodiments consistent with the present invention. Instead, they are merely examples of apparatuses and methods consistent with certain aspects of the present disclosure as set forth in the appended claims.

In the embodiments of the present disclosure, the terms used are merely for the purpose of describing particular embodiments and are not intended to limit the present disclosure. The singular forms of "a", "an", "the", and "said" as used in the present disclosure and the appended claims are intended to include plural forms as well, unless the context clearly indicates otherwise. It should also be understood that the term "and/or" as used herein refers to and includes any or all possible combinations of one or more of the associated listed items. For example, A and/or B may represent three situations: A alone, A and B together, or B alone. The symbol "/" generally indicates an "or" relationship between the associated objects before and after it. The term "a plurality of" refers to two or more; therefore, in the embodiments of the present disclosure, "a plurality of" may also be understood as "at least two."

It should be understood that although the terms first, second, third, and so on may be used in the present disclosure to describe various information, such information should not be limited to these terms. These terms are used merely to distinguish information of the same type from one another. For example, without departing from the scope of the present disclosure, first information may also be referred to as second information, and similarly, second information may also be referred to as first information. Depending on the context, for example, the term "if" as used herein may be interpreted as "when", "upon", or "in response to determining."

The technical solutions in the embodiments of the present disclosure will be clearly and completely described below with reference to the accompanying drawings in the embodiments of the present disclosure. It is obvious that the described embodiments are merely a part of the embodiments of the present disclosure and not all of the embodiments. All other embodiments obtained by those of ordinary skill in the art based on the embodiments of the present disclosure without creative efforts shall fall within the protection scope of the present disclosure.

The embodiments of the present disclosure provide a low-latency service transmission method, an electronic device, and a storage medium, so as to provide a way of transmitting the low-latency service.

The method and the apparatus are based on the same inventive concept. Since the principles for solving the problem by the apparatus and the method are similar, the embodiments of the apparatus and the method may refer to each other, and repeated descriptions are omitted here.

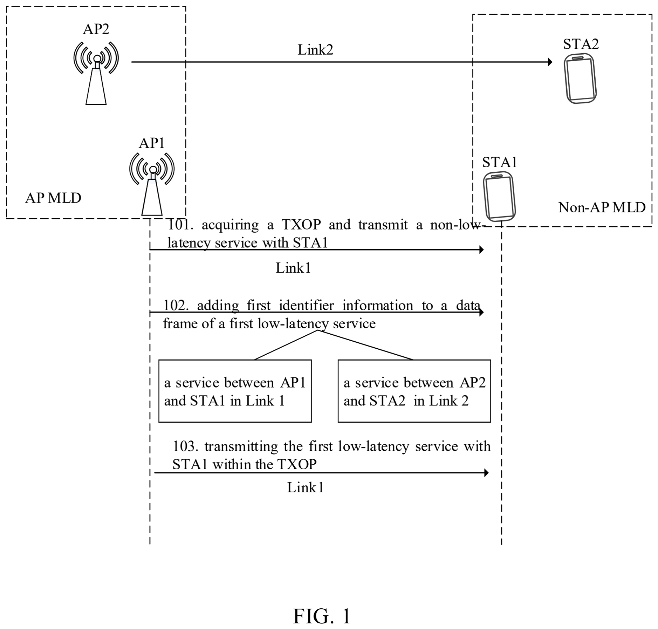

Referring to FIG. 1, FIG. 1 illustrates a first schematic diagram of an application scenario of a low-latency service transmission method provided in the embodiments of the present disclosure. Optionally, a station (STA), for example, an electronic device having a wireless network access function, provides a Frame Delivery service for information transmission. An access point (AP) device, for example, a device having a wireless-to-wired bridging function, is responsible for extending the service provided by a wired network to a wireless network.

In FIG. 1, a first AP (AP1) and a second AP (AP2) affiliate to the same Access Point Multi-Link Device (AP MLD), and a first STA (STA1) and a second STA (STA2) affiliate to the same Non-Access Point Multi-Link Device (Non-AP MLD). In the example shown in FIG. 1, it is assumed that AP1 communicates with STA1 through a first link (Link 1), and similarly, AP2 communicates with STA2 through a second link (Link 2). In addition, Link 1 and Link 2 may respectively be a plurality of links under different frequencies, for example, links under 2.4 GHz, 5 GHz, or 6 GHz, or several links under 2.4 GHz having the same or different bandwidths. Furthermore, there may be a plurality of channels in each link. It may be understood that the communication scenario shown in FIG. 1 is merely exemplary and the concept of the present disclosure is not limited thereto. For example, an AP MLD may be connected to a plurality of (e.g., three) non-AP MLDs, or in each link, the AP may communicate with a plurality of other types of stations.

In the embodiments of the present disclosure, as shown in step 101, when AP1 acquires a Transmit Opportunity (TXOP) in Link 1 and transmits a non-low-latency service with STA1, there may be a situation where AP1 in Link 1 has a low-latency service that needs to be transmitted with STA1, or AP2 in Link 2 has a low-latency service to be transmitted to STA2. Then, AP1 performs step 102: adding first identifier information to a data frame of a first low-latency service, the first identifier information is used to indicate whether the first low-latency service is transmitted within the TXOP.

Specifically, if the low-latency service is transmitted after the non-low-latency service, the latency requirement of the low-latency service may not be satisfied. Therefore, in step 102, first identifier information is added to the data frame of the first low-latency service, for example, the first identifier information is added to a Media Access Control (MAC) header portion of the data frame, to indicate whether the first low-latency service is transmitted within the TXOP. For example, when the first identifier information is set to "1", it indicates that the first low-latency service is transmitted within the TXOP; when the first identifier information is set to "0", it indicates that the first low-latency service is not transmitted within the TXOP. The first low-latency service is a downlink service, which may be a low-latency service between AP1 and STA1, or a low-latency service between AP2 and STA2. The data frame may be, for example, a Physical Layer Protocol Data Unit (PPDU).

Subsequently, AP1 continues to perform step 103, to transmit, in Link 1, within the TXOP, the first low-latency service with STA1; or to transmit, in Link 1, within the TXOP, the first low-latency service between AP2 and STA2.

Optionally, AP1 adds second identifier information to the data frame of the first low-latency service, for indicating the link to which the transmitted first low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the second identifier information may be indicated by a Link bitmap. When the Link bitmap is set to 1, it indicates that the transmitted service is the low-latency service of the STA corresponding to that Link.

In addition, within the TXOP, when AP1 receives, in the first link, a data frame of a non-low-latency service sent to AP2, such as a cross-Link low-latency service, AP1 forwards the data frame of the non-low-latency service to AP2.

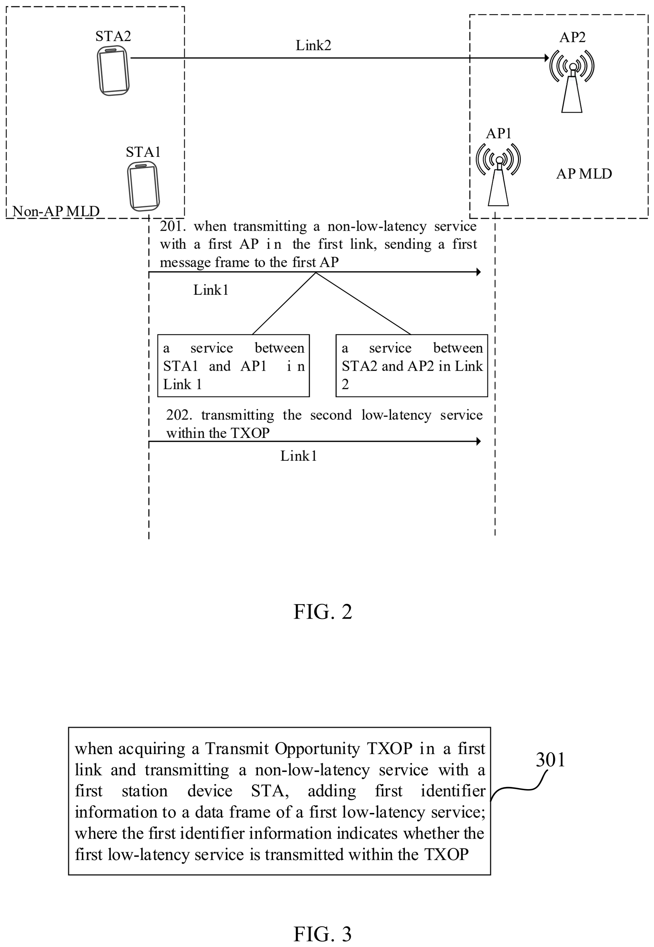

Referring to FIG. 2, FIG. 2 illustrates a second schematic diagram of an application scenario of a low-latency service transmission method provided in the embodiments of the present disclosure. In FIG. 2, a first AP (AP1) and a second AP (AP2) affiliate to the same AP MLD, and a first STA (STA1) and a second STA (STA2) affiliate to the same Non-AP MLD; in the example shown in FIG. 2, it is assumed that AP1 communicates with STA1 through a first link (Link 1), and similarly, AP2 communicates with STA2 through a second link (Link 2). In addition, Link 1 to Link 2 may respectively be a plurality of links under different frequencies, for example, links under 2.4 GHz, 5 GHz, or 6 GHz, or several links under 2.4 GHz having the same or different bandwidths. In addition, there may be a plurality of channels in each link. It may be understood that the communication scenario shown in FIG. 2 is merely exemplary, and the concept of the present disclosure is not limited thereto, for example, an AP MLD may be connected to a plurality of (three) non-AP MLDs, or in each link, the AP may communicate with a plurality of other types of stations.

In the embodiments of the present disclosure, as shown in step 201, when STA1 transmits a non-low-latency service with the first AP in the first link, there may be a situation where STA1 in Link 1 has a low-latency service that needs to be transmitted with AP1, or STA2 in Link 2 has a low-latency service to be transmitted to AP2; then, after STA1 finishes receiving one PPDU of a non-low-latency service in Link 1, STA1 sends a first message frame to the first AP, indicating that the first STA transmits a second low-latency service within the TXOP of the first link; the first message frame may be, for example, an ACK (Acknowledgment) frame or a Block Ack (BA) frame.

The second low-latency service is an uplink service, which may be a low-latency service between AP1 and STA1, or a low-latency service between AP2 and STA2.

Subsequently, STA1 continues to perform step 202, to transmit, in Link 1, within the TXOP, the second low-latency service with STA1; or to transmit, in Link 1, within the TXOP, the second low-latency service between AP2 and STA2.

Optionally, STA1 adds third identifier information to the data frame of the second low-latency service, for indicating the link to which the transmitted second low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the third identifier information may be indicated by a Link bitmap. For example, when the Link bitmap is set to 1, it indicates that the transmitted service is the low-latency service of the STA corresponding to that Link.

In addition, within the TXOP, when STA1 receives, in the first link, a data frame of a non-low-latency service sent to STA2, for example, a cross-Link low-latency service, the STA1 forwards the data frame of the non-low-latency service STA2.

Referring to FIG. 3, the embodiments of the present disclosure provide a low-latency service transmission method. Optionally, the method may be applied to a first access point (AP), and the method may include the following steps:
step 301, when acquiring a Transmit Opportunity (TXOP) in a first link and transmitting a non-low-latency service with a first station (STA), the first AP adds first identifier information to a data frame of a first low-latency service; where the first identifier information indicates whether the first low-latency service is transmitted within the TXOP; where the first low-latency service includes: a service between the first AP and the first STA in the first link and/or a service between a second AP and a second STA in a second link;
where the first AP and the second AP affiliate to the same AP MLD, and the first STA and the second STA affiliate to the same non-AP MLD.

Referring to FIG. 1, when a first AP (AP1) acquires the TXOP in Link 1 and transmits the non-low-latency service with STA1, there may be a situation where AP1 in Link 1 has a low-latency service that needs to be transmitted with STA1, or a second AP (AP2) in Link 2 has a low-latency service to be transmitted to STA2. In this case, AP1 adds the first identifier information to the data frame of the first low-latency service, where the first identifier information indicates whether the first low-latency service is transmitted within the TXOP.

Specifically, if the low-latency service is transmitted after the non-low-latency service, the latency requirement of the low-latency service may not be satisfied. Therefore, the first identifier information is added to the data frame of the first low-latency service, for example, the first identifier information is added in the MAC header portion of the data frame, to indicate whether the first low-latency service is transmitted within the TXOP. The first low-latency service is a downlink service, which may be a low-latency service between AP1 and STA1 or a low-latency service between AP2 and STA2. The data frame may be, for example, a PPDU.

Subsequently, AP1 may transmit, in Link 1, within the TXOP, the first low-latency service with STA1; or transmit, in Link 1, within the TXOP, the first low-latency service between AP2 and STA2.

In the embodiments of the present disclosure, when the first AP acquires the TXOP in the first link and transmits the non-low-latency service with the first station STA, the first AP adds the first identifier information to the data frame of the first low-latency service, the first identifier information indicating whether the first low-latency service is transmitted within the TXOP. When the transmission of a low-latency service needs to be performed, it may be ensured that the low-latency service is transmitted within the acquired TXOP, thereby meeting the UHR requirement. The embodiments of the present disclosure provide a way of transmitting the low-latency service.

Optionally, in the embodiments of the present disclosure, the method further includes:
the first identifier information indicating that the first low-latency service is transmitted within the TXOP, adding second identifier information to the data frame of the first low-latency service; where the second identifier information indicates a link corresponding to the first low-latency service.

The second identifier information is configured to indicate the link to which the transmitted first low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the second identifier information may be indicated by a Link bitmap. When the Link bitmap is set to 1, it indicates that the transmitted service is the low-latency service of the STA corresponding to that Link.

Optionally, in the embodiments of the present disclosure, after adding the first identifier information to the data frame of the first low-latency service, the method further includes Case 1 and/or Case 2:
Case 1: within the TXOP, transmitting, in the first link, a low-latency service with the first STA; as shown in FIG. 1, in Link 1, transmitting the first low-latency service with STA1 within the TXOP, so as to ensure that the low-latency service is transmitted within the acquired TXOP.
Case 2: within the TXOP, transmitting, in the first link, a low-latency service between the second AP and the second STA; as shown in FIG. 1, in Link 1, transmitting, within the TXOP, the first low-latency service between AP2 and STA2, so as to ensure that the low-latency service is transmitted within the acquired TXOP.

Optionally, in the embodiments of the present disclosure, the method further includes:
when acquiring the TXOP in the first link and transmitting the non-low-latency service with the first STA, receiving a first message frame sent by the first STA, where the first message frame indicates that the first STA transmits a second low-latency service within the TXOP; and
receiving, within the TXOP, a data frame of the second low-latency service;
where the second low-latency service includes a service between the first STA and the first AP in the first link and/or a service between the second STA and the second AP in the second link.

As shown in FIG. 2, when STA1 transmits a non-low-latency service with the first AP in the first link, there may be a situation where STA1 in Link 1 has a low-latency service that needs to be transmitted with AP1, or STA2 in Link 2 has a low-latency service to be transmitted to AP2. Then, after STA1 receives a PPDU of a non-low-latency service in Link 1, STA1 sends a first message frame to the first AP. After receiving the first message frame, the first AP confirms that the first STA transmits a second low-latency service within the TXOP of the first link. The first message frame may be, for example, an acknowledgment frame (ACK) or a block acknowledgment frame (Block Ack, BA).

The second low-latency service is an uplink service, which may be a low-latency service between AP1 and STA1, or a low-latency service between AP2 and STA2.

Subsequently, STA1 transmits, in Link 1, within the TXOP, the second low-latency service with STA1; or transmits, in Link 1, within the TXOP, the second low-latency service between AP2 and STA2, and the first AP receives the second low-latency service.

Optionally, in the embodiments of the present disclosure, the data frame of the second low-latency service includes third identifier information, where the third identifier information indicates a link corresponding to the first low-latency service. Optionally, STA1 adds the third identifier information to the data frame of the second low-latency service, and is configured to indicate the link to which the transmitted second low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the third identifier information may be indicated by a Link bitmap. When the Link bitmap is set to 1, it indicates that the transmitted service is the low-latency service of the STA corresponding to that Link.

Optionally, in the embodiments of the present disclosure, within the TXOP, in the first link, a data frame of a non-low-latency service that is sent to the second AP is received, the data frame of the non-low-latency service is forwarded to the second AP.

If AP1 receives, in the first link, the data frame of the non-low-latency service sent to AP2, such as, a cross-Link low-latency service, the data frame of the non-low-latency service is forwarded to AP2.

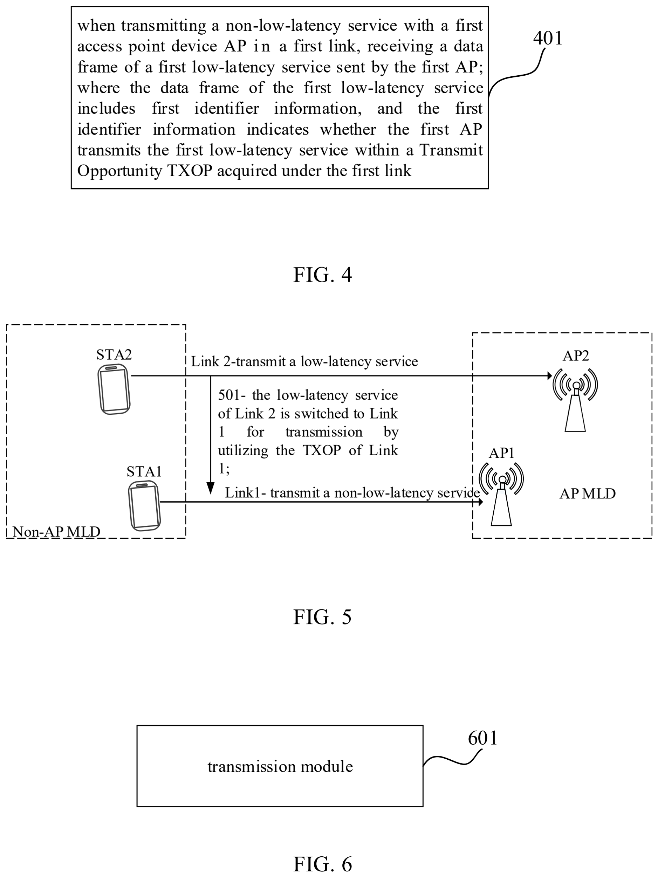

Referring to FIG. 4, an embodiment of the present disclosure provides a low-latency service transmission method. Optionally, the method may be applied to a station STA, and the method may include the following step:
step 401: when transmitting a non-low-latency service with a first access point AP in a first link, a data frame of a first low-latency service sent by the first AP is received; where the data frame of the first low-latency service includes first identifier information, and the first identifier information indicates whether the first AP transmits the first low-latency service within a Transmit Opportunity TXOP acquired in the first link;
where the first low-latency service includes a service between the first AP and the first STA in the first link and/or a service between a second AP and a second STA in a second link;
where the first AP and the second AP affiliate to the same AP MLD, and the first STA and the second STA affiliate to the same non-AP MLD.

Referring to FIG. 2, when the first AP (AP1) acquires a TXOP in Link 1 and transmits a non-low-latency service with STA1, there may be a situation where AP1 in Link 1 has a low-latency service that needs to be transmitted with STA1, or the second AP (AP2) in Link 2 has a low-latency service to be transmitted to STA2. Then, AP1 adds first identifier information to the data frame of the first low-latency service, to indicate whether the first low-latency service is transmitted within the TXOP by means of the first identifier information. When STA1 transmits a non-low-latency service with the first access point AP in the first link, STA1 receives the data frame of the first low-latency service sent by the first AP. For example, the first identifier information is set to "1", it indicates that the first low-latency service is transmitted within the TXOP; the first identifier information is set to "0", it indicates that the first low-latency service is not transmitted within the TXOP.

Specifically, if the low-latency service is transmitted after the non-low-latency service, the latency requirement of the low-latency service may not be satisfied. Therefore, the first identifier information is added to the data frame of the first low-latency service, for example, the first identifier information is added in the MAC header portion of the data frame, to indicate whether the first low-latency service is transmitted within the TXOP. The first low-latency service is a downlink service, which may be a low-latency service between AP1 and STA1 or a low-latency service between AP2 and STA2. The data frame may be, for example, a PPDU.

Subsequently, STA1 may, in Link 1 and within the TXOP, receive the first low-latency service transmitted with SAP1; or, in Link 1 and within the TXOP, receive the first low-latency service transmitted between AP2 and STA2.

In the embodiments of the present disclosure, when the STA transmits the non-low-latency service with the first access point AP in the first link, the STA receives the data frame of the first low-latency service sent by the first AP. The data frame of the first low-latency service includes first identifier information, and the first identifier information indicates whether the first AP transmits the first low-latency service within the Transmit Opportunity TXOP acquired in the first link. When the low-latency service needs to be transmitted, the low-latency service may be ensured to be transmitted within the acquired TXOP, so as to meet the UHR requirement. The embodiments of the present disclosure provide a way of transmitting the low-latency service.

Optionally, in the embodiments of the present disclosure,
the first identifier information indicates that the first AP transmits the first low-latency service within the TXOP, and the data frame of the first low-latency service includes second identifier information; where the second identifier information indicates a link corresponding to the first low-latency service.

The second identifier information is configured to indicate the link to which the transmitted first low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the second identifier information may be indicated by a Link bitmap. When the Link bitmap is set to 1, it indicates that the transmitted service is the low-latency service of the STA corresponding to that Link.

Optionally, in the embodiments of the present disclosure, after receiving, within the TXOP, in the first link, the low-latency service transmitted by the first AP to the first STA, the method further includes:
within the TXOP, receiving, in the first link, the low-latency service transmitted by the first AP to the first STA; as shown in FIG. 1, in Link 1, the first low-latency service is transmitted with STA1 within the TXOP, ensuring that the low-latency service is transmitted within the acquired TXOP.
   and/or
within the TXOP, receiving, in the first link, the low-latency service, transmitted by the first AP, between the second AP and the second STA; as shown in FIG. 1, in Link 1, the first low-latency service transmitted between AP2 and STA2 is transmitted within the TXOP, ensuring that the low-latency service is transmitted within the acquired TXOP.

Optionally, in the embodiments of the present disclosure, the method further includes:
when transmitting the non-low-latency service with the first AP in the first link, sending a first message frame to the first AP, where the first message frame indicates that the first STA transmits a second low-latency service within the TXOP of the first link; and
within the TXOP, sending a data frame of the second low-latency service;
where the second low-latency service includes a service between the first STA and the first AP in the first link and/or a service between the second STA and the second AP in the second link.

As shown in FIG. 2, when STA1 transmits a non-low-latency service with the first AP in the first link, there may be a situation where STA1 in Link 1 has a low-latency service to be transmitted with AP1, or STA2 in Link 2 has a low-latency service to be transmitted to AP2. Then, after STA1 finishes receiving a PPDU of the non-low-latency service in Link 1, STA1 sends a first message frame to the first AP, indicating that the first STA transmits a second low-latency service within the TXOP of the first link. The first message frame may be, for example, an acknowledgment (ACK) frame or a block acknowledgment (Block Ack, BA) frame.

The second low-latency service is an uplink service, which may be a low-latency service between AP1 and STA1, or a low-latency service between AP2 and STA2.

Subsequently, STA1 may, in Link 1 and within the TXOP, transmit the second low-latency service with STA1; or, in Link 1 and within the TXOP, transmit the second low-latency service between AP2 and STA2.

Optionally, in the embodiments of the present disclosure, the data frame of the second low-latency service includes third identifier information, where the third identifier information indicates a link corresponding to the first low-latency service. Optionally, STA1 adds the third identifier information to the data frame of the second low-latency service, and is configured to indicate the link to which the transmitted second low-latency service affiliates. For example, for the low-latency service between AP1 and STA1 in Link 1, the second identifier information is indicated by Link 1; for the low-latency service between AP2 and STA2 in Link 2, the second identifier information is indicated by Link 2. For example, the third identifier information may be indicated by a Link bitmap. When the Link bitmap is set to 1, it indicates that the transmitted service is the low-latency service of the STA corresponding to that Link.

Optionally, in the embodiments of the present disclosure, within the TXOP, in the first link, a data frame of a non-low-latency service sent to the second STA is received, and the data frame of the non-low-latency service is forwarded to the second STA.

If STA1 receives, in the first link, a data frame of a non-low-latency service sent to STA2, for example, a cross-Link low-latency service, the STA1 forwards the data frame of the non-low-latency service to STA2.

Referring to FIG. 5, FIG. 5 illustrates a third schematic diagram of an application scenario of the low-latency service transmission method provided in various embodiments of the present disclosure. In FIG. 5, the first AP (AP1) and the second AP (AP2) affiliate to the same AP MLD, and the first STA (STA1) and the second STA (STA2) affiliate to the same non-AP MLD. In the example shown in FIG. 5, AP1 and STA1 transmit a non-low-latency service via a first link (Link 1), and AP2 and STA2 have a low-latency service to be transmitted in a second link (Link 2). As indicated by arrow 501, the low-latency service of Link 2 is switched to Link 1 for transmission by utilizing the TXOP of Link 1. Specifically, STA1 sends a first message frame to AP1 to indicate that STA1 transmits, within the TXOP in Link 1, the low-latency service between AP2 and STA2 in Link 2.

When AP1 receives the data frame of the low-latency service that should be sent to AP2, AP1 forwards the data frame to AP2.

Referring to FIG. 6, based on the same principle as the method provided in the embodiments of the present disclosure, the embodiments of the present disclosure further provide an electronic device, where the electronic device is a first access point AP, and the electronic device includes:
a transmission module 601, configured to, when acquiring a Transmit Opportunity (TXOP) in a first link and transmitting a non-low-latency service with a first station STA, add first identifier information to a data frame of a first low-latency service; where the first identifier information indicates whether the first low-latency service is transmitted within the TXOP;
where the first low-latency service includes a service between the first AP and the first STA in the first link and/or a service between a second AP and a second STA in a second link;
where the first AP and the second AP affiliate to the same AP MLD, and the first STA and the second STA affiliate to the same non-AP MLD.

The embodiments of the present disclosure further provide a low-latency service transmission apparatus, applied to a first access point AP, the apparatus includes:
a wireless frame transmission module, configured to, when acquiring a Transmit Opportunity (TXOP) in a first link and transmitting a non-low-latency service with a first station STA, add first identifier information to a data frame of a first low-latency service; where the first identifier information indicates whether the first low-latency service is transmitted within the TXOP;
where the first low-latency service includes a service between the first AP and the first STA in the first link and/or a service between a second AP and a second STA in a second link;
where the first AP and the second AP affiliate to the same AP MLD, and the first STA and the second STA affiliate to the same non-AP MLD.

The apparatus further includes another module of the electronic device in the foregoing embodiments, which will not be repeated herein.

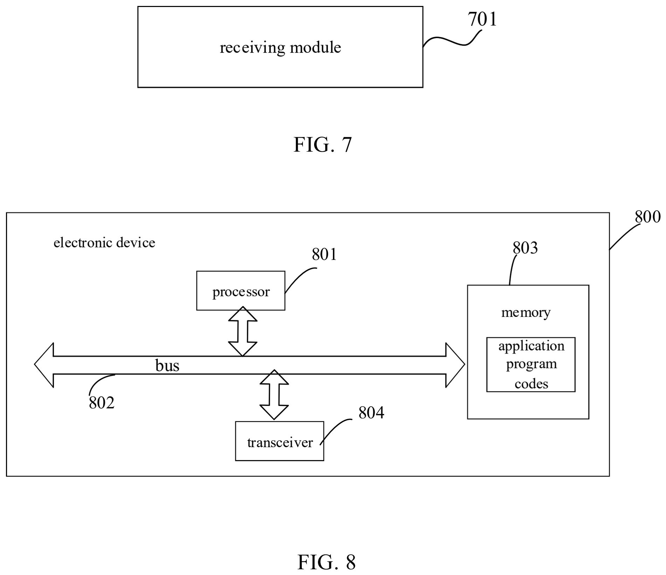

Referring to FIG. 7, based on the same principle as the method provided in the embodiments of the present disclosure, the embodiments of the present disclosure further provide an electronic device, where the electronic device is a station STA, and the electronic device includes:
a receiving module 701, configured to receive, when transmitting a non-low-latency service with a first access point AP in a first link, a data frame of a first low-latency service sent by the first AP; where the data frame of the first low-latency service includes first identifier information, and the first identifier information indicates whether the first AP transmits the first low-latency service within a Transmit Opportunity (TXOP) acquired in the first link;
where the first low-latency service includes a service between the first AP and the first STA in the first link and/or a service between a second AP and a second STA in a second link;
where the first AP and the second AP affiliate to the same AP MLD, and the first STA and the second STA affiliate to the same non-AP MLD.

The embodiments of the present disclosure further provide a low-latency service transmission apparatus, applied to a station STA, the apparatus including:
a wireless frame receiving module, configured to receive, when transmitting a non-low-latency service with a first access point AP in a first link, a data frame of a first low-latency service sent by the first AP;
where the data frame of the first low-latency service includes first identifier information, and the first identifier information indicates whether the first AP transmits the first low-latency service within a Transmit Opportunity (TXOP) acquired in the first link;
where the first low-latency service includes a service between the first AP and the first STA in the first link and/or a service between a second AP and a second STA in a second link;
where the first AP and the second AP affiliate to the same AP MLD, and the first STA and the second STA affiliate to the same non-AP MLD.

The apparatus further includes another module of the electronic device in the foregoing embodiments, which will not be repeated herein.

In an optional embodiment, an embodiment of the present disclosure further provides an electronic device. As shown in FIG 8, the electronic device 800 shown in FIG 8 may be a server, which includes: a processor 801 and a memory 803. The processor 801 and the memory 803 are connected, such as connected through a bus 802. Optionally, the electronic device 800 may further include a transceiver 804. It should be noted that in actual applications, the number of transceiver 804 is not limited to one, and the structure of the electronic device 800 does not constitute a limitation on the embodiments of the present disclosure.

The processor 801 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. It may implement or execute various exemplary logic blocks, modules and circuits described with reference to the disclosure of the present disclosure. The processor 801 may also be a combination that implements computing functions, such as a combination of one or more microprocessors, a combination of a DSP and a microprocessor, etc.

The bus 802 may include a path for transmitting information among the above components. The bus 802 may be a peripheral component interconnect (PCI) bus or an extended industry standard architecture (EISA) bus, etc. The bus 802 may be categorized as an address bus, a data bus, a control bus, etc. For ease of representation, only one bold line is used to represent the bus in FIG .8, but it does not mean that there is only one bus or one type of bus.

The memory 803 may be a read only memory (ROM) or other types of static storage devices that can store static information and instructions, a random access memory (RAM) or other types of dynamic storage devices that can store information and instructions, or an electrically erasable programmable read only memory (EEPROM), a compact disc read only memory (CD-ROM) or other optical disk storage, a disk storage (including a compressed optical disk, a laser disk, an optical disk, a digital versatile disk, a Blu-ray disk, etc.), a magnetic disk storage medium or other magnetic storage device, or any other medium that can be used to carry or store the desired program code in the form of instructions or data structures and can be accessed by a computer, but is not limited thereto.

The memory 803 is configured to store application program codes for executing the solutions of the present disclosure, and the execution is controlled by the processor 801. The processor 801 is configured to execute the application program codes stored in the memory 803 to implement the content shown in the above method embodiments.

The electronic device includes, but is not limited to, a mobile terminal such as a mobile phone, a laptop computer, a digital broadcast receiver, a personal digital assistant (PDA), a tablet computer (PAD), a portable multimedia player (PMP), a vehicle-mounted terminal (such as a vehicle-mounted navigation terminal), etc., and a fixed terminal such as a digital TV, a desktop computer, etc. The electronic device shown in FIG 8 is merely an example and should not impose any limitation to the functions and scope of use of the embodiments of the present disclosure.

The server provided by the present disclosure may be an independent physical server, or a server cluster composed of a plurality of physical servers or a distributed system, or a cloud server that provides basic cloud computing services such as cloud services, cloud databases, cloud computing, cloud functions, cloud storage, network services, cloud communications, middleware services, domain name services, security services, CDN, big data and artificial intelligence platforms, etc. The terminal may be a smart phone, a tablet computer, a laptop computer, a desktop computer, a smart speaker, a smart watch, etc., but is not limited thereto. The terminal and the server may be directly or indirectly connected via wired or wireless communication manner, which is not limited by the present disclosure herein.

An embodiment of the present disclosure provides a computer-readable storage medium having a computer program stored thereon, which, when run on a computer, enables the computer to execute the corresponding contents of the foregoing method embodiments.

It should be understood that, although the individual steps in the flowchart of the accompanying drawings are shown in sequence as indicated by the arrows, these steps are not necessarily executed in sequence in the order indicated by the arrows. Unless otherwise specified herein, the execution of these steps is not strictly limited in order, and they may be executed in other orders. Moreover, at least a part of the steps in the flowchart of the accompanying drawings may include a plurality of sub-steps or a plurality of phases, and these sub-steps or phases are not necessarily executed at the same time, but can be executed at different times, and the execution order thereof is not necessarily sequential, but may be executed in turn or alternately with the other steps or at least a portion of sub-steps or phases of the other steps.

It should be noted that the computer-readable medium mentioned above in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, a computer-readable storage medium may be any tangible medium that contains or stores a program that may be used by or in combination with an instruction execution system, apparatus, or device. In the present disclosure, a computer-readable signal medium may include a data signal propagated in a baseband or as part of a carrier, which carries computer-readable program codes. The propagated data signal may take a variety of forms, including but not limited to electromagnetic signals, optical signals, or any suitable combination of the above. Computer readable signal media may also be any computer readable medium other than computer readable storage medium, which may send, propagate or transmit a program for use by or in conjunction with an instruction execution system, apparatus or device. The program codes contained on the computer readable medium may be transmitted by using any appropriate medium, including but not limited to: wires, optical cables, RF (radio frequency), etc., or any suitable combination of thereof.

The computer-readable medium may be included in the electronic device, or may stand alone without being installed in the electronic device.

The computer-readable medium carries one or more programs. When the one or more programs are executed by the electronic device, the electronic device executes the methods shown in the above embodiments.

According to an aspect of the present disclosure, a computer program product or a computer program is provided. The computer program product or the computer program includes computer instructions, and the computer instructions are stored in a computer-readable storage medium. The processor of the computer device reads the computer instructions from the computer-readable storage medium, and the processor executes the computer instructions, so that the computer device executes the methods provided in the above-mentioned various optional implementations.

Computer program codes for performing the operations of the present disclosure may be written in one or more programming languages or combinations thereof, including object-oriented programming languages - such as Java, Smalltalk, C++, and conventional procedural programming languages such as "C" language or similar programming languages. The program codes may be executed entirely on the user's computer, partially on the user's computer, as a stand-alone software package, partially on the user's computer and partially on a remote computer, or entirely on a remote computer or server. In situations involving remote computers, the remote computer may be connected to the user's computer via any kind of network, including a local area network (LAN) or a wide area network (WAN), or it may be connected to an external computer (e.g., via the Internet by using an Internet service provider).

The flow charts and block diagrams in the accompanying drawings illustrate the possible architectures, functions and operations of the systems, methods and computer program products that may be implemented in accordance with various embodiments of the present disclosure. In this regard, each square box in the flow chart or block diagram may represent a module, a program segment or a part of codes, and the module, the program segment or the part of the codes contains one or more executable instructions for implementing a specified logical function. It should also be noted that in some implementations as replacements, the functions marked in the square box may also occur in a sequence different from that marked in the accompanying drawings. For example, two consecutively represented boxes may actually be executed substantially in parallel, and they may sometimes be executed in the reverse order, depending on the functions involved. It should also be noted that each square box in the block diagram and/or flow chart, and the combination of the square boxes in the block diagram and/or flow chart may be implemented with a dedicated hardware-based system that performs a specified function or operation, or may be implemented with a combination of dedicated hardware and computer instructions.

The modules involved in the embodiments described in the present disclosure may be implemented by software or hardware. The name of a module does not constitute a limitation of the module itself in a certain case. For example, module A may also be described as "a module A for performing an operation B".

The above description is an illustration of the preferred embodiments of the present disclosure and the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept, for example, a technical solution formed by interchanging the above features with (but not limited to) technical features with similar functions disclosed in the present disclosure.

## Claims

1. A low-latency service transmission method, performed by a first access point AP, comprising:
adding, when acquiring a Transmit Opportunity TXOP in a first link and transmitting a non-low-latency service with a first station STA, first identifier information to a data frame of a first low-latency service; wherein the first identifier information indicates whether the first low-latency service is transmitted within the TXOP;
wherein the first low-latency service comprises: a service between the first AP and the first STA in the first link and/or a service between a second AP and a second STA in a second link;
wherein the first AP and the second AP affiliate to a same AP MLD, and the first STA and the second STA affiliate to a same non-AP MLD.

2. The low-latency service transmission method according to claim 1, comprising:
the first identifier information indicating that the first low-latency service is transmitted within the TXOP, adding second identifier information to the data frame of the first low-latency service; wherein the second identifier information indicates a link corresponding to the first low-latency service.

3. The low-latency service transmission method according to claim 1 or 2, after adding the first identifier information to the data frame of the first low-latency service, further comprising:
within the TXOP, transmitting, in the first link, a low-latency service with the first STA;
and/or
within the TXOP, transmitting, in the first link, a low-latency service between the second AP and the second STA.

4. The low-latency service transmission method according to claim 1, comprising:
receiving, when acquiring the TXOP in the first link and transmitting the non-low-latency service with the first STA, a first message frame sent by the first STA, the first message frame indicating that the first STA transmits a second low-latency service within the TXOP; and
receiving, within the TXOP, a data frame of the second low-latency service;
wherein the second low-latency service comprises a service between the first STA and the first AP in the first link and/or a service between the second STA and the second AP in the second link.

5. The low-latency service transmission method according to claim 4, wherein the data frame of the second low-latency service comprises third identifier information; and wherein the third identifier information indicates a link corresponding to the first low-latency service.

6. The low-latency service transmission method according to any one of claims 1 to 5, comprising:
within the TXOP, receiving, in the first link, a data frame of the non-low-latency service sent to the second AP, and
forwarding the data frame of the non-low-latency service to the second AP.

7. A low-latency service transmission method, performed by a first station STA, comprising:
receiving, when transmitting a non-low-latency service with a first access point AP in a first link, a data frame of a first low-latency service sent by the first AP; wherein the data frame of the first low-latency service comprises first identifier information, and the first identifier information indicates whether the first AP transmits the first low-latency service within a Transmit Opportunity TXOP acquired in the first link;
wherein the first low-latency service comprises: a service between the first AP and the first STA in the first link and/or a service between a second AP and a second STA in a second link;
wherein the first AP and the second AP affiliate to a same AP MLD, and the first STA and the second STA affiliate to the same non-AP MLD.

8. The low-latency service transmission method according to claim 7, wherein:
the first identifier information indicates that the first AP transmits the first low-latency service within the TXOP, the data frame of the first low-latency service comprises second identifier information; wherein the second identifier information indicates a link corresponding to the first low-latency service.

9. The low-latency service transmission method according to claim 7 or 8, after receiving the data frame of the first low-latency service sent by the first AP, further comprising:
within the TXOP, receiving, in the first link, a low-latency service, sent by the first AP, between the first AP and the first STA;
and/or
within the TXOP, receiving, in the first link, a low-latency service, sent by the first AP, between the second AP and the second STA.

10. The low-latency service transmission method according to claim 7, comprising:
sending, when transmitting the non-low-latency service with the first AP in the first link, a first message frame to the first AP, wherein the first message frame indicates that the first STA transmits a second low-latency service within the TXOP of the first link; and
sending a data frame of the second low-latency service within the TXOP;
wherein the second low-latency service comprises: a service between the first STA and the first AP in the first link and/or a service between the second STA and the second AP in the second link.

11. The low-latency service transmission method according to claim 10, wherein the data frame of the second low-latency service comprises third identifier information; wherein the third identifier information indicates a link corresponding to the first low-latency service.

12. The low-latency service transmission method according to any one of claims 7 to 11, comprising:
within the TXOP, receiving, in the first link, a data frame of the non-low-latency service sent to the second STA, and
forwarding the data frame of the non-low-latency service to the second STA.

13. An electronic device, wherein the electronic device is a first access point AP, and the electronic device comprises:
a transmission module, configured to, add, when acquiring a Transmit Opportunity TXOP in a first link and transmitting a non-low-latency service with a first station STA, first identifier information to a data frame of a first low-latency service; wherein the first identifier information indicates whether the first low-latency service is transmitted within the TXOP;
wherein the first low-latency service comprises: a service between the first AP and the first STA in the first link and/or a service between a second AP and a second STA in a second link;
wherein the first AP and the second AP affiliate to a same AP MLD, and the first STA and the second STA affiliate to a same non-AP MLD.

14. An electronic device, wherein the electronic device is a station STA, and the electronic device comprises:
a receiving module, configured to receive, when transmitting a non-low-latency service with the first access point AP in a first link, a data frame of a first low-latency service sent by a first AP; wherein the data frame of the first low-latency service comprises first identifier information, and the first identifier information indicates whether the first AP transmits the first low-latency service within a Transmit Opportunity TXOP acquired in the first link;
wherein the first low-latency service comprises: a service between the first AP and a first STA in the first link and/or a service between a second AP and a second STA in a second link;
wherein the first AP and the second AP affiliate to a same AP MLD, and the first STA and the second STA affiliate to a same non-AP MLD.

15. An electronic device, comprising a memory, a processor, and a computer program stored in the memory and executable by the processor, wherein the processor executes the program to implement the method according to any one of claims 1 to 6 or implement the method according to any one of claims 7 to 12.

16. A computer-readable storage medium, wherein the computer-readable storage medium stores a computer program, wherein the computer program is executed by a processor to implement the method according to any one of claims 1 to 6 or implement the method according to any one of claims 7 to 12.
